Europäisches Patentamt

(19) European Patent Office

Office européen des brevets

(11) EP 0 831 406 A2

(12) EUROPEAN PATENT APPLICATION

(43) Date of publication:
25.03.1998 Bulletin 1998/13

(51) Int. Cl.$^6$: G06F 17/30, G06F 17/60

(21) Application number: 97111729.6

(22) Date of filing: 10.07.1997

(84) Designated Contracting States:
AT BE CH DE DK ES FI FR GB GR IE IT LI LU MC
NL PT SE
Designated Extension States:
AL LT LV RO SI

(30) Priority: 11.09.1996 EP 96114506

(71) Applicant:
International Business Machines
Corporation
Armonk, N.Y. 10504 (US)

(72) Inventors:
• Leymann, Frank, Dr.
71134 Aidlingen 2 (DE)
• Roller, Dieter
71101 Schönaich (DE)

(74) Representative:
Teufel, Fritz, Dipl.-Phys.
IBM Deutschland Informationssysteme GmbH,
Patentwesen und Urheberrecht
70548 Stuttgart (DE)

(54) Implementing a workflow engine in a database management system

(57) The present invention relates to the area of workflow management systems (WFMS). WFMS execute a multitude of process models consisting of a network of potentially distributed activities. WFMS store WFMS state information on the process models, the process model instances currently executed by the WFMS together with the instances's state and the state of the WFMS themselves in Database Management Systems (DBMS). The WFMS and the DBMS may be different computer systems connected by a computer network.

The invention teaches an implementation of WFMS which significantly improves their internal processing speed and throughput to deliver as much as possible of the computer systems' processing power to the business processes themselves. According to the current invention the WFMS engines encompassing a set of control functions are implemented directly within the DBMS. This contrasts the state of the art approach which realizes all control functions within the WFMS themselves. Only stubs corresponding to these control functions are still implemented within the WFMS. The main purpose of these stubs is to exploit the services of the control function cores within the DBMS. Such an implementation architecture increases performance of WFMS significantly as the control functions mainly operate on and within those computer systems which store the data on the WFMS state. To implement the control functions of the WFMS within the DBMS the current invention teaches to exploit the stored procedure technology.

FIG. 11

## Description

# 1 Background of the Invention

## 1.1 Field of the Invention

The present invention relates to the field of implementation of workflow management systems (WFMS) on computer systems.

## 1.2 Description and Disadvantages of Prior Art

A new area of technology with increasing importance is the domain of **Workflow-Management-Systems (WFMS)**. WFMS support the modelling and execution of business processes. Business processes control which piece of work of a network of pieces of work will be performed by whom and which resources are exploited for this work, i.e. a business process describes how an enterprise will achieve its business goals. The individual pieces of work might be distributed across a multitude of different computer systems connected by some type of network.

The process of designing, developing and manufacturing a new product and the process of changing or adapting an existing product presents many challenges to product managers and engineers to bring the product to market for the least cost and within schedule while maintaining or even increasing product quality. Many companies are realizing that the conventional product design process is not satisfactory to meet these needs. They require early involvement of manufacturing engineering, cost engineering, logistic planning, procurement, manufacturing, service and support with the design effort. Furthermore, they require planning and control of product data through design, release, and manufacturing.

The correct and efficient execution of **business processes** within a company, e. g. development or production processes, is of enormous importance for a company and has significant influence on company's overall success in the market place. Therefore, those processes have to be regarded similar as technology processes and have to be tested, optimized and monitored. The management of such processes is usually performed and supported by a computer based process or workflow management system.

In D. J. Spoon: "Project Management Environment", IBM Technical Disclosure Bulletin, Vol. 32, No. 9A, February 1990, pages 250 to 254, a process management environment is described including an operating environment, data elements, and application functions and processes.

In R. T. Marshak: "IBM's FlowMark, Object-Oriented Workflow for Mission-Critical Applications", Workgroup Computing Report (USA), Vol. 17, No. 5, 1994, page 3 to 13, the object character of IBM FlowMark as a client/server product built on a true object model that is targeted for mission-critical production process application development and deployment is described.

In H. A. Inniss and J. H. Sheridan: "Workflow Management Based on an Object-Oriented Paradigm", IBM Technical Disclosure Bulletin, Vol. 37, No. 3, March 1994, page 185, other aspects of object-oriented modelling on customization and changes are described.

In F. Leymann and D. Roller: "Business Process Management with FlowMark", Digest of papers, Cat. No. 94CH3414-0, Spring COMPCON 94, 1994, pages 230 to 234, the state-of-the-art computer process management tool IBM FlowMark is described. The meta model of IBM FlowMark is presented as well as the implementation of IBM FlowMark. The possibilities of IBM FlowMark for modelling of business processes as well as their execution are discussed. The product IBM FlowMark is available for different computer platforms and documentation for IBM FlowMark is available in every IBM branch.

In F. Leymann: "A meta model to support the modelling and execution of processes", Proceedings of the 11th European Meeting on Cybernetics and System Research EMCR92, Vienna, Austria, April 21 to 24, 1992, World Scientific 1992, pages 287 to 294, a meta model for controlling business processes is presented and discussed in detail.

The "IBM FlowMark for OS/2", document number GH 19-8215-01, IBM Corporation, 1994, available in every IBM sales office, represents a typical modern, sophisticated, and powerful workflow management system. It supports the modelling of business processes as a network of activities. This network of activities, the **process model**, is constructed as a directed, acyclic, weighted, colored graph. The nodes of the graph represent the **activities** or **workitems** which are performed. The edges of the graph, the **control connectors**, describe the potential sequence of execution of the activities. Definition of the process graph is via the IBM FlowMark Definition Language (FDL) or the built-in graphical editor. The runtime component of the workflow manager interprets the process graph and distributes the execution of activities to the right person at the right place, e. g. by assigning tasks to a work list according to the respective person, wherein said work list is stored as digital data within said workflow or process management computer system.

In F. Leymann and W. Altenhuber: "Managing business processes as an information resource", IBM Systems Journal, Vol. 32(2), 1994, the mathematical theory underlying the IBM FlowMark product is described.

In D. Roller: "Verifikation von Workflows in IBM FlowMark", in J. Becker und G. Vossen (Hrsg.): "Geschaeftsprozessmodellierung und Workflows", International Thompson Publishing, 1995, the requirement and possibility of the verification of workflows is described. Furthermore the feature of graphical animation for verification of the process logic is presented as it is implemented within the IBM FlowMark product.

For implementing a computer based process management system, firstly the business processes have to be analyzed and, as the result of this analysis, a process model has to be constructed as a network of activities corresponding to the business process. In the IBM FlowMark product, the process models are not transformed into an executable. At run time, an instance of the process is created from the process model, called a process instance. This process instance is then interpreted dynamically by the IBM FlowMark product.

Most workflow management systems (WFMS) keep, for various reasons like for recovery and restart requirements, process model information and the state information for the process instances in some type of database management system (DBMS). Relational database management system (RDBMS) are important candidates for that purposes. The WFMS control functions, most important parts of a WFMS engine, such as navigating through the process graph, performing staff resolution, and invoking programs, access the information in the database, make the appropriate computations, and store new state information in the database. Access to the database takes place for instance via the appropriate SQL calls. Even if WFMS make use of DBMS both areas are completely different areas of technology.

Within the DBMS area of technology the concept of **stored procedures** is known. Stored procedures allow an application program to be run in two parts. One part runs on the client and the other on the server. This allows one call to a remote database to execute a procedure, that may represent several, repetitive accesses to the database. The server procedure at the database runs within the same transaction as the client application.

Due to the distributed nature of executing process models by WFMS, due to the huge amount of WFMS state information because of potentially very complex process models, due to the potentially large number of simultaneous users of a WFMS and so forth WFMS are permanently faced with the problem of trying to improve their internal processing speed and throughput to deliver as much as possible of the computer systems' processing power to the business processes themselves.

**1.3 Objective of the Invention**

The invention is based on the objective to improve a WFMS's throughput and responsiveness. More particularly, the objective of the invention is to provide an improved WFMS internal handling of WFMS state information and the administration of that state information in DBMS.

**2 Summary and Advantages of the Invention**

The objective of the invention is solved by claim 1.

Most WFMS keep process model information and the state information for the process instances together with detailed status information on the execution status of the process by the WFMS in a relational database management system (RDBMS), or some other type of database management system (DBMS). Thus the RDBMS store WFMS state information of the WFMS itself and of the process model instance currently executed by the WFMS. The WFMS control functions, such as navigating through the process graph, performing staff resolution, invoking programs and many more access the WFMS state information in the database, make the appropriate computations, and store new state information in the database. Access to the database takes place via the appropriate SQL DBMS calls. According to the current invention and in contrary to the current state of the art WFMS control functions are no longer implemented within the WFMS system itself. The current invention teaches to implement the WFMS engines, encompassing a set of control functions, directly within the DBMS. Only stubs corresponding to these control functions are still implemented within the WFMS. The main purpose of these stubs is to request the services of the WFMS control function cores within the DBMS.

The technique proposed by the current invention increases performance of WFMS significantly as the WFMS control functions mainly operate on and within those computer systems, namely the DBMS, which store the data on the WFMS state. Typically a WFMS control function performs a multitude of DBMS accesses. With an implementation of WFMS control function according the teaching of claim 1 all DBMS access take place from within the WFMS control function core executed directly within the DBMS itself. Such an approach is advantageous as the network traffic is reduced significantly. Network access is required no longer for each DBMS access. A single network access is sufficient, namely the one to request the service of the WFMS control function core. Further performance benefits are achieved by reducing the number of process switches due to the WFMS control function core operating directly within the DBMS. Moreover the current teaching allows for an integration of two separate technologies, the WFMS and the DBMS technologies. As the most significant part of WFMS, the WFMS engine, is now part of a DBMS, WFMS may be viewed and treated as DBMS extensions.

Additional advantages are accomplished by claim 2. The current teaching suggests to exploit the stored procedure technology of DBMS a specific type of implementation technology for the WFMS control function cores.

Such an approach has the advantage that an available and proven technology can be used. Moreover this approach generates the largest performance benefits as it leads to the tightest integration of WFMS and DBMS systems.

Additional advantages are accomplished by claim 3. The teaching according claim 3 suggests implement all WFMS control functions with DBMS access within the DBMS.

This approach maximizes above mentioned benefits and results in a maximum of integration of WFMS and DBMS computer systems.

Additional advantages are accomplished by claim 4. The teaching according to claim 4 suggests to transfer the invention into a three tier system structure encompassing a WFMS client computer system, a WFMS server computer system and a DBMS system.

Such an extension allows the current invention to be applied to almost all existing WFMS.

## 3 Brief Description of the Drawings

Figure 1    is a diagram reflecting the conceptual record structure of the "Processes" build time table

Figure 2    is a diagram reflecting the conceptual record structure of the "Activities" build time table

Figure 3    is a diagram reflecting the conceptual record structure of the "Process Instances" run-time table

Figure 4    is a diagram reflecting the conceptual record structure of the "Activity Instances" run-time table

Figure 5    is a diagram reflecting the conceptual record structure of the "Work Item" table

Figure 6    is a visualization of the WFMS control function "Start a Process Instance" in pseudo-code

Figure 7    is a visualization of a standard database application accessing a database not exploiting the stored procedure technology

Figure 8    is a visualization of a database application accessing a database now exploiting the stored procedure technology

Figure 9    is a visualization of a WFMS control function stub for the "Start a Process Instance" example in pseudo-code

Figure 10    is a visualization of the overall structure of a WFMS according the state of the art

Figure 11    is a visualization of the overall structure of the new WFMS structure according the current invention

Figure 12    is a visualization of an application of the current invention to a tree-tier WFMS architecture

## 4 Description of the Preferred Embodiment

The current invention is illustrated based on IBM's FlowMark workflow management system. Of course any other WFMS could be used instead. Furthermore the current teaching applies also to any other type of system which offers WFMS functionalities not as a separate WFMS but within some other type of system.

If the current specification is referring to a RDBMS this is just meant as a certain type of example. Other types of DBMS can be exploited instead.

## 4.1 Introduction

The following is a short outline on the basic concepts of a workflow management system based on IBM's FlowMark WFMS:

From an enterprise point of view the management of business processes is becoming increasingly important: **business processes** control which piece of work will be performed by whom and which resources are exploited for this work, i.e. a business process describes how an enterprise will achieve its business goals. A WFMS may support both, the modeling of business processes and their execution.

Modeling of a business process as a syntactical unit in a way that is directly supported by a software system is extremely desirable. Moreover, the software system can also work as an interpreter basically getting as input such a model: The model, called a **process model**, can then be instantiated and the individual sequence of work steps depending on the context of the instantiation of the model can be determined. Such a model of a business process can be perceived as a template for a class of similar processes performed within an enterprise; it is a schema describing all possible execution variants of a particular kind of business process. An instance of such a model and its interpretation represents an individual process, i.e. a concrete, context dependent execution of a variant prescribed by the model. A WFMSs facilitates the management of business processes. It provides a means to describe models of business processes (build time) and it drives business processes based on an associated model (run time). The meta model of IBM's WFMS FlowMark, i.e. the syntactical elements provided for describing business process models, and the meaning and interpretation of these syntactical elements, is described next.

**Activities** are the fundamental elements of the meta model. An activity represents a business action that is from a certain perspective a semantical entity of its own. With the model of the business process it might have a fine-structure that is then represented in turn via a model, or the details of it are not of interest at all from a business process modeling point of view. Refinement of activities via process models allows for both, modeling business processes bottom-up and top-down.

The results that are in general produced by the work represented by an activity is put into an **output container**, which is associated with each activity. Since an activity will in general require to access output containers of other activities, each activity is associated in addition with an **input container** too. At run time, the actual values for the formal parameters building the input container of an activity represent the actual context of an instance of the activity.

Since activities might not be executed arbitrarily they are bound together via **control connectors**. A control connector might be perceived as a directed edge between two activities; the activity at the connector's end point cannot start before the activity at the start point of the connector has finished (successfully). Control connectors model thus the potential flow of control within a business process model.

In addition, a Boolean expression called **transition condition** is associated with each control connector. Parameters from output containers of activities having already produced their results are followed as parameters referenced in transition conditions. When at run time an activity terminates successfully all control connectors leaving this activity are determined and the truth value of the associated transition conditions is computed based on the actual values of their parameters. Only the end points of control connectors the transition conditions of which evaluated to TRUE are considered as activities that might be executed based on the actual context of the business process. Transition conditions model thus the context dependent actual flow of control within a business process (i.e. an instance of a model).

FlowMark consists, at the coarsest level, of a build time component and a run time component. The build time component supports the modeling of business processes according to the meta model described above and the run time component supports the corresponding semantics. Both components are implemented in a client/server structure. The client delivers the interaction with the user via an object-oriented graphical interface, invokes local tools, and provides animation. The server maintains the database for process instances, navigates through the process graph, and assigns the activities to the proper resources.

Process definition includes modeling of activities, control connectors between the activities, input/output container, and data connectors. A process is represented as a directed acyclic graph with the activities as nodes and the control/data connectors as the edges of the graph. The graph is manipulated via a built-in, event-driven, CUA compliant graphic editor. The data containers are specified as named data structures. These data structures themselves are specified via the DataStructureDefnition facility. FlowMark distinguishes three main types of activities: program activities, process activities, and blocks. Program activities are implemented through programs. The programs are registered via the Program Definition facility. Blocks contain the same constructs as processes, such as activities, control connectors etc. They are however not named and have their own exit condition. If the exit condition is not met, the block is started again. The block thus implements a Do Until construct. Process activities are implemented as processes. These subprocesses are defined separately as regular, named processes with all its usual properties. Process activities offer great flexibility for process definition. It not only allows to construct a process through permanent refinement of activities into program and process activities (top-down), but also to build a process out of a set of existing processes (bottom-up). In particular, process activities help to organize the modeling work if several process modeler are working together. It allows the team members to work independently on different activities. Program and process activities can be associated with a time limit. The time limit specifies how long the activity may take. If the time is exceeded, a designated person is notified. If this person does not react within another time limit, the process administrator is notified. It not only helps to recognize critical situation but also to detect process deficiencies as all notifications are recorded in an audit trail.

All data structures used as templates for the containers of activities and processes are defined via the Data Structure Definition Facility. Data Structures are names and are defined in terms of elementary data types, such as float, integer, or string and references to existing data structures. Managing data structures as separate entities has the advantage that all interfaces of activities and their implementations are managed consistently in one place (similar to header files in programming languages).

All programs which implement program activities are defined via the Program Registration Facility. Registered for each program is the name of the program, its location, and the invocation string. The invocation string consists of the program name and the command string passed to the program.

Before process instances can be created, the process model must be translated to ensure the correctness and completeness of the process model. The translated version of the model is used as a template when a process instance is created. This allows to make changes to the process model without affecting executing process instances. A process instance is started either via the graphical interface of via the callable process application programming interface. When a process is started, the start activities are located, the proper people are determined, and the activities are posted onto the work list of the selected people. If a user selects the activity, the activity is executed and removed from the work list of any other user to whom the activity has been posted. After an activity has executed, its exit condition is evaluated. If not met, the activity is rescheduled for execution, otherwise all outgoing control connectors and the associated transition conditions are evaluated. A control connector is selected, if the condition evaluates to TRUE. The target activities of the selected control connectors are then evaluated. If their start conditions are true, they are posted to the work list of selected people. A process is considered terminated, if all end activities have completed. To make sure that all end activities finish, a death path analysis is performed. It removes all edges in the process graph which can never be reached due to failing transition conditions. All information about the current state of a process is stored in the database maintained by the server. This allows for forward recovery in the case of crashes.

## 4.2 The WFMS Engine and Control Functions

Most workflow management systems (WFMS) keep process model information and the state information for the process instances together with detailed status information on the execution status of the process by the WFMS in a relational database management system (RDBMS), or some other type of database management system (DBMS). Thus the RDBMS store WFMS state information of the WFMS itself and of the process model instance currently executed by the WFMS. The WFMS control functions, such as navigating through the process graph, performing staff resolution, invoking programs and many more access the WFMS state information in the database, make the appropriate computations, and store new state information in the database. Access to the database takes place via the appropriate SQL DBMS calls. According to the current state of the art the WFMS control functions are implemented within the WFMS system itself. As a certain control function will access the RDBMS repeatedly a lot of repetitive WFMS to RDBMS interactions will occur. Through a certain WFMS implementation concept the current invention reduces a significant amount of these WFMS to RDBMS interactions thus improving the WFMS system performance significantly.

The collection of above mentioned control functions build the heart of a WFMS called the **WFMS engine**.

For illustration purposes of the implementation of a WFMS a typical implementation of a certain WFMS control function on top of a RDBMS, i.e. which makes use of the RDBMS, will be outlined in greater detail. Of course the teaching below given for this example applies to all other WFMS control functions also. The control function **Start a Process Instance** will be chosen for that objective. This control function is part of the **WFMS navigator**, the core piece of the WFMS engine. The WFMS navigator performs all actions associated with processing the process model. The navigator understands a set of messages resulting in the execution of certain control functions like:

○ process instance related messages, such as start, terminate, suspend, and resume a process, and
○ activity related messages, such as finishing or starting a work item.

Each message results in the execution of a series of SQL calls. One of the messages for example is the request for starting a process instance.

The navigator relies with all its operations on two sets of tables: **build time tables** and **run time tables**.

The build time tables contain the static information determined during build time, such as process model information, staff directory, or program information. The run time tables contain the dynamic information determined during run time, such as the process instance information. The various table instances are stored within the RDBMS.

It should be noted that the outlined implementation is for illustrative purposes only, exclusively concentrating on the concept; an actual implementation is far more complex. The examples are given in pseudo code in a simplified notion of SQL without any error checking. Details about SQL can be found in any book about relational databases.

## 4.3 Build Time Tables and Run Time Tables

### 4.3.1 Build Time Tables

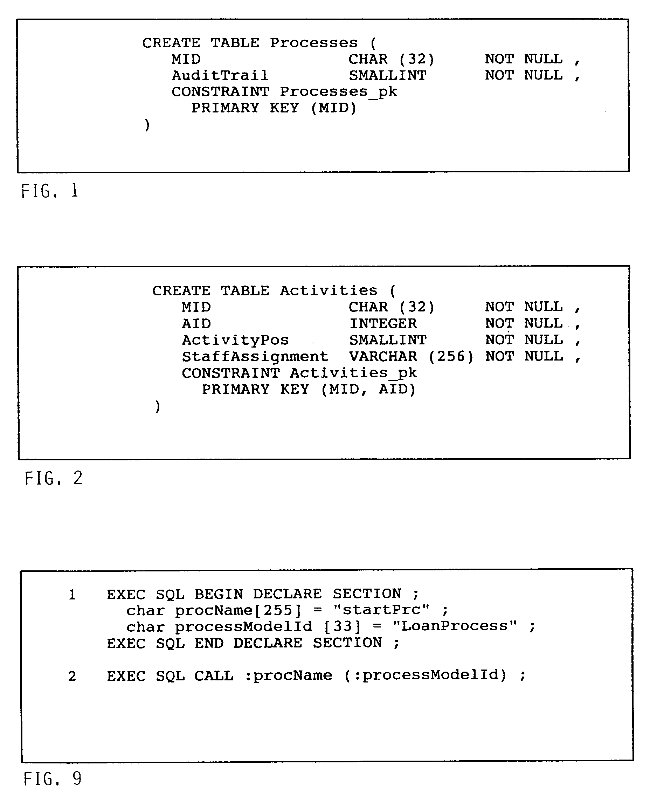

Figure 1 shows the table structure of the main build time table, the **Processes** table, which contains one entry for each process model and serves as the anchor point for all build time tables. **MID**, the key of the table, contains the process name, which uniquely identifies a process model. This key is referenced by build time and run time tables. In addition, the table contains all process model related information, such as whether an audit trail should be written or not.

Figure 2 shows the table structure of the **Activities** build time table. An entry is maintained in the table for each activity in a process model; it is uniquely identified by the **AID** column. **MID** contains the identifier of the appropriate process model. The **ActivityPos** field contains an indicator about the relative position of the activity within the process model, such as whether the activity is a start or and end activity. This helps among others to quickly determine start activities when a process is started. The **StaffAssignment** field contains an SQL statement which is the SQL representation of the staff assignment. At run time, the SQL statement is executed dynamically to obtain those users, who should receive the activity as a work item.

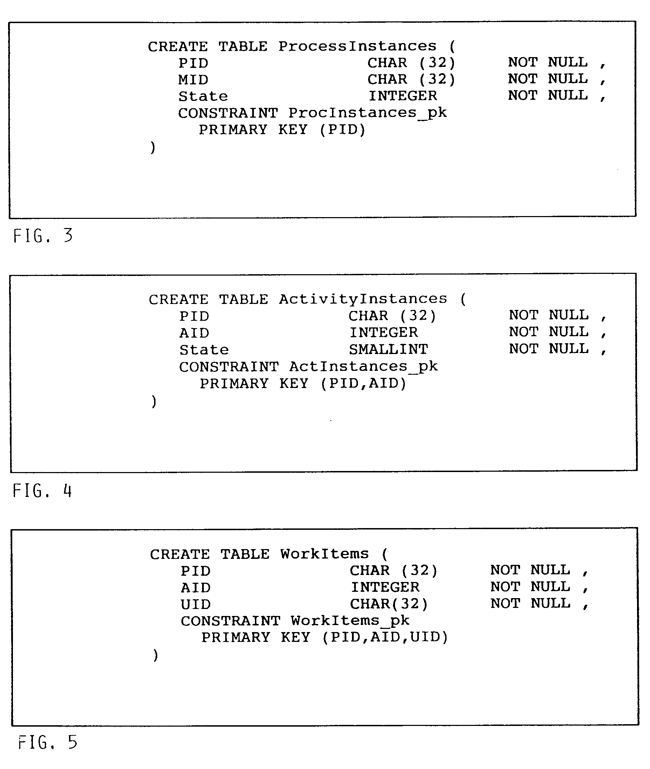

Figure 3 shows the table structure of the main run time table , the **ProcessInstances** table, which contains one entry per process instance. **PID** uniquely identifies each process instance. The appropriate process model identifier is stored in **MID**. **State** contains the actual state of the process instance, such as running, suspended, or terminated.

Figure 4 shows table structure of the **ActivityInstances** table, which contains one entry for each activity instance. **PID** is the identifier of the process instance this activity instance belongs to, **AID** the identifier of the activity within the process model; both together uniquely identify an activity instance. **State** contains the current state of the activity instance, such as ready, active, or finished.

Figure 5 shows the table structure of the **work item** table which is used to maintain the workitems associated with a particular activity of a process instance. One entry is maintained for each user who gets the activity assigned.

### 4.3.2 Starting a Process

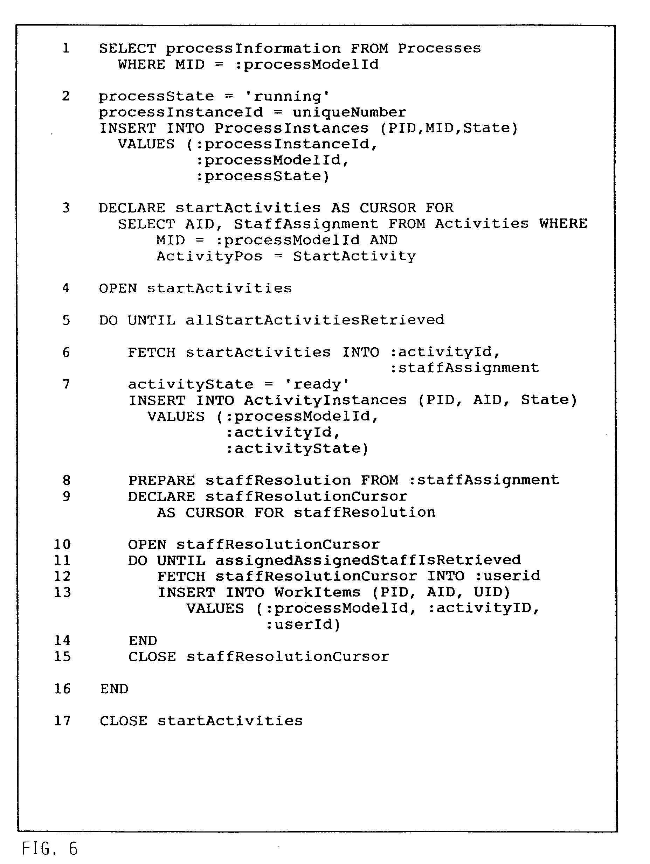

Figure 6 shows the appropriate code fragment of the control function to start a process. According to the state of the art this control function would be implemented on that computer system acting as the WFMS. It is important to recognize the multitude of SQL statements resulting in a multitude of separate interactions between the WFMS and the potentially remote RDMS. Statement 1 retrieves the appropriate process model information from the **Processes** build time table. Statement 2 sets the process instance state to running, creates a unique process instance identifier, and inserts this information into the **ProcessInstances** table. Statement 3 declares a cursor to retrieve all start activities ( ActivityPos = StartActivity ) for the appropriate process model. The cursor is opened in statement 4. Statement 5 starts a loop over all start activities. Statement 6 retrieves for each activity the appropriate staff resolution and the activity identifier. Statement 7 sets the activity instance state to active and inserts an appropriate entry for the activity instance into the **ActivityInstances** table. As pointed out earlier, the staff resolution is maintained in the form of an SQL statement to access the staff database. This statement is then prepared for execution in statement 8. An appropriate cursor is defined in statement 9 to retrieve the user to be assigned, and then opened in statement 10. Statement 11 starts a loop to retrieve all user to whom the activity should be assigned as work item. Statement 12 fetches the appropriate user identifier and statement 13 inserts an appropriate entry into the **WorkItems** table. Statement 14 closes the cursor for retrieval of the assigned users. Processing of starting a process terminates with closing the cursor for retrieving the start activities.

### 4.4 Stored Procedures

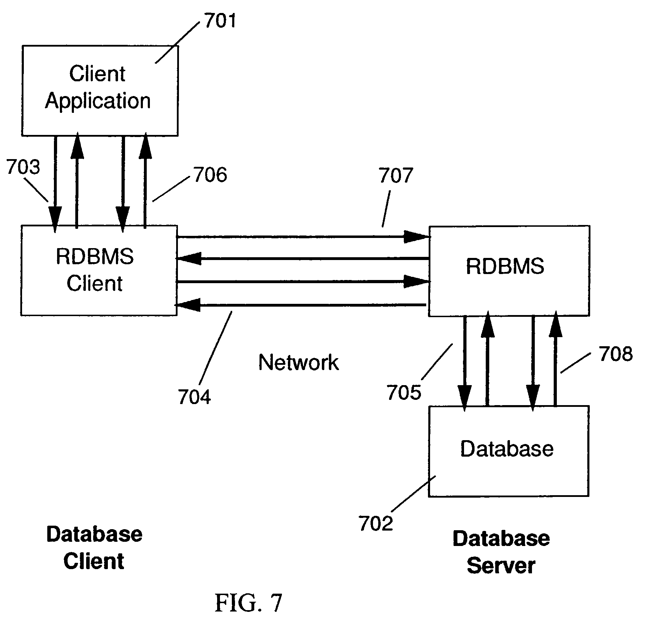

Figure 7 shows how a normal database manager application 701 accesses a database 702 located on a database server. Each individual access 703, 704, 705 or 706, 707, 708 to the database must go across the network.

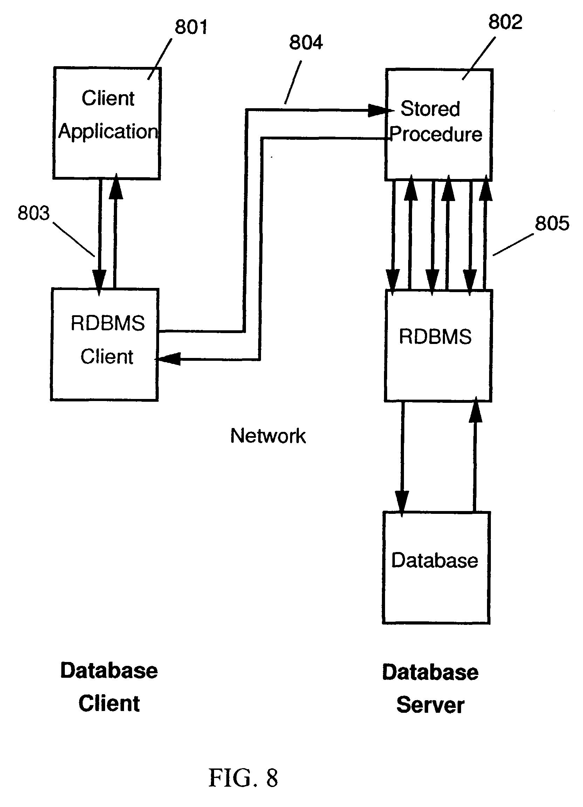

Figure 8 shows the same application using the stored procedures technology. A stored procedure is a technique that allows an application 801 running on a client to call a procedure 802 physically stored on a database server. The server procedure 802 executes and accesses the database locally to the DBMS and returns information to the client application. This approach is especially advantageous if the stored procedures accesses the database multiple times. Under these circumstances a single access 803, 804 of the application 801 is required across the network while the repetitive databases accesses 805 can be executed in a performance effective manner directly within the database system. To use this technique, an application must be written in two separate procedures. The calling procedure 801 is contained in a client application and executes on the client. The server procedure 802 executes at the location of the database on the database server. The stored procedure 802 performs the processing on the database server, without transmitting unnecessary data across the network. Only those records are actually required at the client need to be transmitted. The server procedure at the database runs within the same transaction as the client.

In addition to all SQL calls, a stored procedure can also perform those DBMS features that exist only on the database server (but not on the database client), which includes commands to list directories, such as LIST DATABASE DIRECTORY and LIST NODE DIRECTORY.

Stored procedures may execute in two different modes: **fenced** and **non-fenced**. A non-fenced procedure runs in the same address space as the database manager and results in increased performance when compared with a fenced stored procedure (which runs in an address space that is isolated from the database manager's). While performance improvements can be expected when running a non-fenced stored procedure, there is the danger that user code could accidentally damage the database control structures.

Applications using stored procedures have the following advantages:

- Reduced network traffic Applications that process large amounts of data but require only a subset of the data be returned to the user. A properly designed application using stored procedures returns only the data that is needed by the client; the amount of data transmitted across the network is reduced.
- Improved performance of server intensive work Applications executing SQL statements that can be grouped together without user intervention. The more SQL statements that are grouped together, the larger the savings in network traffic. A typical application requires two trips across the network for each SQL statement, whereas an application using the stored procedures technique requires two trips across the network for each group of SQL statements. This reduces the number of trips, resulting in a savings from the overhead associated with each trip.
- Improved performance on single processor setup Stored procedures provide even some performance benefits in system setups where the application client and the database server are installed on the same physical machine. In this situation, no network traffic is involved, eliminating the gains from reduced network traffic, however it still requires address space (process) switching between the client and the server. Every call also requires an authentication check for each call, which is not required for the calls within a stored procedure.

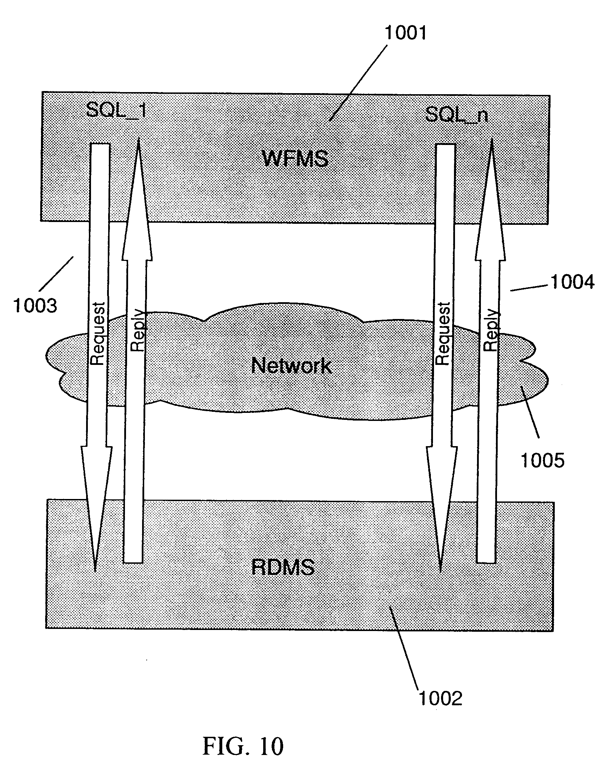

Based on the stored procedure technology a WFMS control function, like the **Start a Process Instance** code fragment example for starting a process would then be implemented as two pieces. The new piece is the client piece 801, for which a fragment is shown in Figure 9. Statement 1 declares two host variables, **procName** to hold the name of the stored procedure which starts a process instance, and **processModelId** to hold the identifier (name) of the process model for which a process should be started. Statement 2 then calls the stored procedure **startPrc** and passes the name of the process model in parenthesis. Thus this client piece of the WFMS control function is just a small stub representing the WFMS control function within the WFMS and which requests the associated service of the stored procedure within the DBMS to perform the service request and to deliver the actual processing results to a caller.

The actual core of the WFMS control function is represented by the stored procedure 802 which is to a large extend identical to the code fragment of the control function **Start a Process Instance** visualized in Figure 6. In contrast to the state of the art WFMS technology the WFMS control function core is now no longer located within the WFMS but within the DBMS storing the WFMS state information. A further difference, not shown in the figures, is a piece of initialization code which accepts the passed host variable.

## 4.5 Implementing WFMS Control Functions as Stored Procedures

Figure 10 shows simplified the overall structure of a WFMS according the state of the art. The WFMS represented by a certain control function 1001 acts as a client to the RDBMS 1002. Every WFMS control function, as shown in the previous chapter, consists of a series of SQL calls 1003 to 1004. This structure exhibits all the performance disadvantages discussed in the previous chapter as these SQL request have to be executed by passing system boundaries possibly involving communication across a computer network 1005 for each individual SQL request.

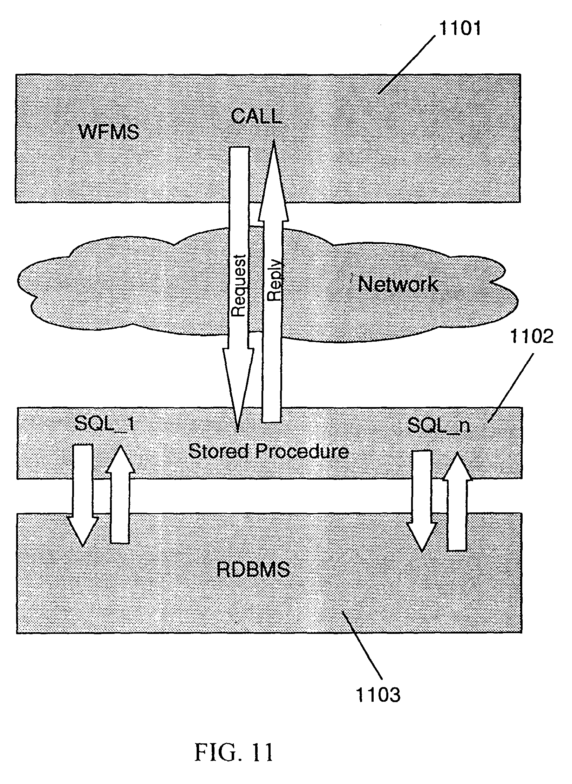

Implementing the WFMS control functions as stored procedures changes the structure of the WFMS implementation to the one depicted in Figure 11. A WFMS navigation step, such as starting a process or finishing a workitem, is then implemented as a stored procedure which is called by the WFMS. More precisely a WFMS control function stub 1101 is requesting the service of an associated WFMS control function core 1102 no located within the RDMS 1103. As all work is done in the database, minimal interaction and data passing between the WFMS and the RDBMS is required; all SQL calls are performed within the stored procedure, no containers, for example, have to be retrieved from the database into the WFMS workspace and stored back later into the database. By comparing the WFMS structure of Figure 10 to that of Figure 11 it becomes apparent that the current invention achieved a serious amount of integration of two separate areas of technology, WFMS and DBMS technology.

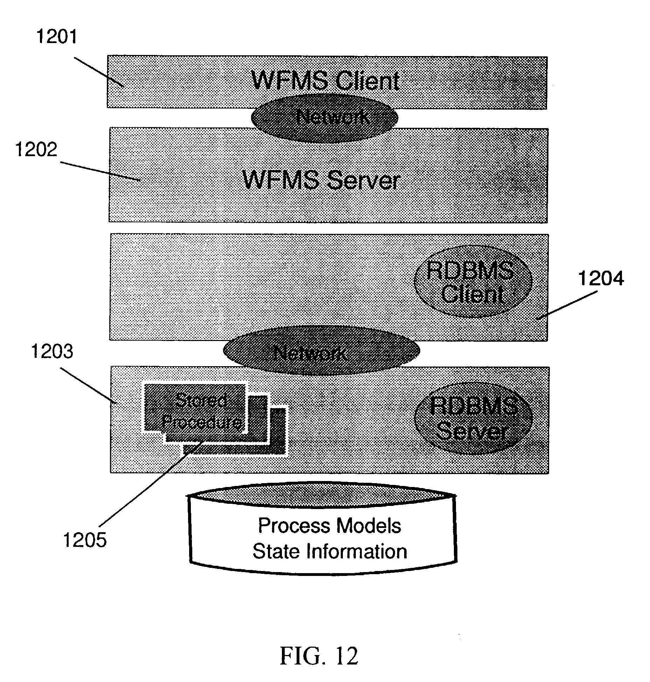

To demonstrate the flexibility of the current teaching it will be shown that the implementation of the database parts of the WFMS control functions as stored procedures is completely independent of the actual architecture of the WFMS. Figure 12 shows the system structure of a WFMS with a three tier structure encompassing a WFMS client 1201, a WFMS server 1202 and a RDBMS 1203. These structural components my be located on different computer systems or some of them may share the same physical computer system. The WFMS client on the user's workstation communicates with the WFMS server, which executes on a different workstation. The WFMS server accesses the RDBMS using the client interface 1204 provided by the RDBMS. The RDBMS itself may be on the same workstation as the WFMS server or on a different one. In this architecture, the WFMS and the RDBMS are exploiting a client/server structure. The current invention may be also applied to thus a system structure by implementing the WFMS control function stub on the WFMS client 1201 and the WFMS control function core on as stored procedure 1205 within the RDBMS.

Other architectures include a simpler, two tier architecture, where all WFMS functions are performed on the clients work station by accessing the second tier, which holds the RDBMS. In this case, only the RDBMS exploits a client/server structure.

## 5 Acronyms

**DBMS** Database Management System
**RDBMS** Relational Database Management System
**WFMS** Workflow Management System

## Claims

1. A computer system acting as a Workflow-Management-System (WFMS) and the same or another computer system acting as a Database-Management-System (DBMS) said WFMS and said DBMS connected by a computer network and further said WFMS comprising at least one WFMS-control-function-means for controlling the processing of a process-model-instance and said WFMS-control-function-means using said DBMS to administrate a state of said WFMS while processing said process-model-instance and
  said WFMS being characterized by

implementing said WFMS-control-function-means as WFMS-control-function-core-means and WFMS-control-function-stub-means; and further

said WFMS-control-function-core-means being located within said DBMS and administrate said state of said WFMS directly within the DBMS returning processing results at the end of all interactions with said DBMS; and further

said WFMS-control-function-stub-means being located within said WFMS requesting service from said WFMS-control-function-core-means.

2. A WFMS according claim 1 wherein said WFMS-control-function-core-means are implemented as a stored-procedure.

3. A WFMS according claim 1 or 2 wherein any of a multitude of WFMS-control-functions is implemented as a pair of WFMS-control-function-core-means and WFMS-control-function-stub-means.

4. A WFMS according to anyone of claim 1 to 3 wherein said WFMS is comprising at least one WFMS-Client and at least one WFMS-Server said WFMS-Client and said WFMS-Server being the same or different computer systems connected by said computer network and wherein said WFMS-control-function-stub-means are implemented in said WFMS-Client.

5. In a computer systems comprising a Workflow-Management-System (WFMS) and in the same or different computer system comprising a Database-Management-System (DBMS) and said WFMS and said DBMS connected by a computer network a method of executing a WFMS-control-function that controls the processing of a process-model-instance and that uses said DBMS to administrate a state of said WFMS while processing said process-model-instance and

said method comprising a stub-step processed within the WFMS; and

said method further comprising a core-step, initiated by said stub-step, said core-step implemented as a stored-procedure is located within said DBMS and said core-step is administrating said state of said WFMS by retrieving, analyzing, modifying and/or storing WFMS state information directly within the DBMS and returning processing results at the end of all interactions with said DBMS.

```
CREATE TABLE Processes (
   MID                CHAR (32)      NOT NULL ,
   AuditTrail         SMALLINT       NOT NULL ,
   CONSTRAINT Processes_pk
     PRIMARY KEY (MID)
)
```

FIG. 1

```
CREATE TABLE Activities (
   MID                CHAR (32)      NOT NULL ,
   AID                INTEGER        NOT NULL ,
   ActivityPos        SMALLINT       NOT NULL ,
   StaffAssignment    VARCHAR (256)  NOT NULL ,
   CONSTRAINT Activities_pk
     PRIMARY KEY (MID, AID)
)
```

FIG. 2

```
1   EXEC SQL BEGIN DECLARE SECTION ;
       char procName[255] = "startPrc" ;
       char processModelId [33] = "LoanProcess" ;
    EXEC SQL END DECLARE SECTION ;

2   EXEC SQL CALL :procName (:processModelId) ;
```

FIG. 9

```
        CREATE TABLE ProcessInstances (
            PID                 CHAR (32)       NOT NULL ,
            MID                 CHAR (32)       NOT NULL ,
            State               INTEGER         NOT NULL ,
            CONSTRAINT ProcInstances_pk
                PRIMARY KEY (PID)
        )
```

FIG. 3

```
        CREATE TABLE ActivityInstances (
            PID                 CHAR (32)       NOT NULL ,
            AID                 INTEGER         NOT NULL ,
            State               SMALLINT        NOT NULL ,
            CONSTRAINT ActInstances_pk
                PRIMARY KEY (PID,AID)
        )
```

FIG. 4

```
        CREATE TABLE WorkItems (
            PID                 CHAR (32)       NOT NULL ,
            AID                 INTEGER         NOT NULL ,
            UID                 CHAR(32)        NOT NULL ,
            CONSTRAINT WorkItems_pk
                PRIMARY KEY (PID,AID,UID)
        )
```

FIG. 5

```
1    SELECT processInformation FROM Processes
        WHERE MID = :processModelId

2    processState = 'running'
     processInstanceId = uniqueNumber
     INSERT INTO ProcessInstances (PID,MID,State)
        VALUES (:processInstanceId,
                :processModelId,
                :processState)

3    DECLARE startActivities AS CURSOR FOR
        SELECT AID, StaffAssignment FROM Activities WHERE
            MID = :processModelId AND
            ActivityPos = StartActivity

4    OPEN startActivities

5    DO UNTIL allStartActivitiesRetrieved

6       FETCH startActivities INTO :activityId,
                                    :staffAssignment
7       activityState = 'ready'
        INSERT INTO ActivityInstances (PID, AID, State)
           VALUES (:processModelId,
                   :activityId,
                   :activityState)

8       PREPARE staffResolution FROM :staffAssignment
9       DECLARE staffResolutionCursor
           AS CURSOR FOR staffResolution

10      OPEN staffResolutionCursor
11      DO UNTIL assignedAssignedStaffIsRetrieved
12         FETCH staffResolutionCursor INTO :userid
13         INSERT INTO WorkItems (PID, AID, UID)
              VALUES (:processModelId, :activityID,
                      :userId)
14      END
15      CLOSE staffResolutionCursor

16   END

17   CLOSE startActivities
```

FIG. 6

701

Client
Application

703

706

707

RDBMS
Client

Network

704

705

RDBMS

708

702

Database

**Database
Client**

**Database
Server**

FIG. 7

801

804

802

Client
Application

Stored
Procedure

803

805

RDBMS
Client

RDBMS

Network

Database

**Database
Client**

**Database
Server**

FIG. 8

FIG. 10

FIG. 11

1201

WFMS Client

Network

1202

WFMS Server

RDBMS
Client

1204

1203

Stored
Procedure

RDBMS
Server

Network

1205

Process Models
State Information

FIG. 12